# EUROPÄISCHE PATENTANMELDUNG

(11) **EP 2 530 584 A1**
(43) Veröffentlichungstag der Anmeldung: **05.12.2012**
(21) Anmeldenummer: 11004526.7
(22) Anmeldetag: 03.06.2011
(51) Int. Cl.: G06F 9/44, G05B 19/418

(54) **Konfigurationseinrichtung zur graphischen Erstellung einer Testsequenz**

(71) Anmelder: dSPACE digital signal processing and control engineering GmbH, 33102 Paderborn (DE)
(72) Erfinder: Hartmann, Dirk, 33100 Paderborn (DE); Sprick, Raimund, 33102 Paderborn (DE); Louis, Ulrich, 33098 Paderborn (DE); Bostanci, Erkan, 33102 Paderborn (DE); Jäger, Thomas, 33154 Salzkotten (DE)
(74) Vertreter: Gesthuysen, von Rohr & Eggert

(57) **Zusammenfassung**

Dargestellt und beschrieben ist eine Konfigurationseinrichtung (1) zur graphischen Erstellung wenigstens einer Testsequenz (2) zur Ansteuerung einer Testvorrichtung mit mindestens einer elektronischen Rechnereinheit, wobei die Testvorrichtung gemäß der erstellten Testsequenz (2) ansteuerbar ist, wobei die Konfigurationseinrichtung (1) mindestens eine Anzeigevorrichtung (3) aufweist, mit der Anzeigevorrichtung (3) in einem Bibliothekfeld (4) graphische Bibliothek-Funktionselemente (5) angezeigt werden, wobei die Testsequenz (2) durch Anordnen wenigstens einer Instanz (6) eines Bibliothek-Funktionselements (5) in einem Konfigurationsfeld (7) erstellbar ist, wobei die in dem Konfigurationsfeld (7) angeordnete Instanz (6) eines Bibliothek-Funkionselements (5) das Bibliothek-Funktionselement (5) selbst referenziert

Eine Konfigurationseinrichtung (1) mit einer verbesserten Handhabung und Implementierung von Funktionsabwandlungen in Instanzen (6) von graphischen Bibliothek-Funktionselementen (5) wird bereitgestellt, indem das graphische Bibliothek-Funktionselement (5) mit einem Funktionsplatzhalter (8) ausstattbar ist, wobei der Funktionsplatzhalter (8) in der Instanz (6) des Bibliothek-Funktionselements (5) mit einer Instanzfunktionalität ausstattbar ist, wobei die Referenz der Instanz (6) des Bibliothek-Funktionselements (5) auf das Bibliothek-Funktionselement (5) erhalten bleibt.

## Beschreibung

Die Erfindung betrifft eine Konfigurationseinrichtung zur graphischen Erstellung wenigstens einer Testsequenz zur Ansteuerung einer Testvorrichtung mit mindestens einer elektronischen Rechnereinheit, wobei die Testvorrichtung gemäß der erstellten Testsequenz ansteuerbar ist, wobei die Konfigurationsvorrichtung mindestens eine Anzeigevorrichtung aufweist, mit der Anzeigevorrichtung in einem Bibliothekfeld graphische Bibliothek-Funktionselemente angezeigt werden, wobei die Testsequenz durch Anordnen wenigstens einer Instanz eines Bibliothek-Funktionselements in einem Konfigurationsfeld erstellbar ist, wobei die in dem Konfigurationsfeld angeordnete Instanz eines Bibliothek-Funkionselements das Bibliothek-Funktionselement selbst referenziert.

Derartige Konfigurationseinrichtungen sind aus dem Stand der Technik seit längerem bekannt und dienen als technisches Hilfsmittel, um eine Testvorrichtung gezielt ansprechen und ansteuern zu können (z. B. "AutomationDesk 3.2, Test and Experiment Software", Produktbeschreibung, dSPACE 2011). Bei der Testvorrichtung handelt es sich üblicherweise um einen leistungsstarken Simulationsrechner, der häufig über mehrere elektronische Rechnereinheiten und zugeordnete I/0-Geräte verfügt, wobei ein zu testendes Gerät (device under test), wie z. B. ein Steuergerät, an die Testvorrichtung angeschlossen wird; dies entspricht einem typischen Aufbau eines Hardware-in-the-Loop-Systems.

Bei der Testsequenz handelt es sich um eine gezielte Ansteuerung der Testvorrichtung und der von der Testvorrichtung üblicherweise umfassten I/0-Komponenten, so dass das mit der Testvorrichtung verbundene und zu testende Gerät mit bestimmten Signalen beaufschlagt wird. Die Reaktion des zu testenden Geräts auf die Stimulation wird dann ebenfalls mit der Testvorrichtung messtechnisch erfasst und mit dem erwarteten Verhalten verglichen, so dass festgestellt werden kann, ob sich das zu testende Gerät wunschgemäß verhält, Häufig ist die Testvorrichtung mit einem echtzeitfähigen Betriebssystem ausgestattet, so dass auch das zeitliche Verhalten der Testsequenz vorgegeben werden kann und auch dass zeitliche Verhalten des angeschlossenen und zu testenden Geräts beurteilbar ist.

Wie in anderen Bereichen hat sich die graphische Programmierung auch bei der Erstellung von Testsequenzen als überaus nützlich erwiesen, wobei darunter die Beschreibung der Testsequenz durch Blockschaltbilder zu verstehen ist. Die Abfolge von Testereignissen wird durch eine Aneinanderreihung von als Blöcken dargestellten Funktionselementen beschrieben.

Die Konfigurationseinrichtung kann auf einem von der Testvorrichtung verschiedenen Rechner implementiert sein und mit der Testvorrichtung nur über eine Datenverbindung verbunden sein, Es ist dann möglich, dass die erstellte Testsequenz auf der Konfigurationseinrichtung selbst ausgeführt wird und der Testvorrichtung nur entsprechende Anweisungen zur Ausführung der Testsequenz übermittelt werden. Genau so gut ist es möglich, dass mit Hilfe der Konfigurationseinrichtung die graphisch erstellte Testsequenz in ein ausführbares Programm übersetzt wird und dieses Programm auf der Testvorrichtung ausgeführt wird. Es ist auch möglich, dass die Konfigurationseinrichtung und die Testvorrichtung gerätemäßig zusammenfallen, auf die genaue gerätetechnische Konfiguration kommt es vorliegend nicht an. Aus dem Stand der Technik bekannte Konfigurationseinrichtungen weisen üblicherweise eine Grundausstattung an Funktionen auf, auf die bei der Erstellung einer Testsequenz zurückgegriffen werden kann, diese Grundausstattung besteht in Bibliotheken von graphischen Funktionselementen. Beispiele für solche Bibliothek-Funktionselemente sind eine Schleifen-Funktionalität (for/while) oder eine Bedingungs-Funktionalität (if-then-else), wichtig sind auch entsprechende Bibliothek-Funktionselemente, die die Testvorrichtung abbilden, so dass die Testvorrichtung über die Testsequenz hardwaremäßig ansprechbar ist.

Die vorgenannten Bibliotheken müssen nicht zwingend vorgegeben sein, derartige Bibliotheken können auch durch den Verwender der Konfigurationseinrichtung erstellbar sein.

Bei der graphischen Erstellung einer Testsequenz wird üblicherweise so vorgegangen, dass aus einer in einem Bibliothekfeld dargestellten Bibliothek ein grafisches Bibliothek-Funktionselement ausgewählt wird und das ausgewählte graphische Bibliothek-Funktionselement in einem Konfigurationsfeld angeordnet wird ("drag-and-drop"). Das in dem Konfigurationsfeld angeordnete Bibliothek-Funktionselement ist nicht das Bibliothek-Funktionselement der Bibliothek selbst, sondern eine Instanz des graphischen Bibliothek-Funktionselements, wobei diese Instanz mit dem Bibliothek-Funktionselement in Verbindung steht, mit anderen Worten, das Bibliothek-Funktionselement referenziert. Das bedeutet, dass eine nachträgliche Änderung an dem Bibliothek-Funktionselement innerhalb der Bibliothek auch eine Auswirkung hat auf die Instanzen dieses graphischen Bibliothek-Funktionselements in den Testsequenzen, in denen Instanzen des Bibliothek-Funktionselements verwendet werden.

Wenn innerhalb einer Testsequenz die Instanz eines Bibliothek-Funktionselements geändert werden soll, dann ist dies nur möglich, indem die Referenz zu dem Bibliothek-Funktionselement aufgegeben wird und die Testsequenz eine Kopie des Bibliothek-Funktionselements erhält an Stelle der Referenz in die Bibliothek. Zwar kann diese - abgeänderte - Kopie des Funktionselements dann wieder erneut als ein Bibliothek-Funktionselement definiert werden, jedoch hat dies zur Folge, dass die Funktionselement-Bibliotheken ständig anwachsen, selbst dann, wenn nur geringfügige Abwandlungen von existierenden Funktionselementen erstellt werden. Nachteilig ist dabei, dass gewünschte Änderungen einer Grundfunktionalität, die allen Funktionselementen gleich ist, entweder in verschiedenen Testsequenzen lokal erfolgen muss, wenn keine Referenz mehr zu dem Bibliothek-Element existiert, oder aber die Änderung in jeder abweichenden Ausführung des Bibliothek-Funktionselements vorgenommen werden muss, was ebenfalls aufwendig ist.

Das Arbeiten mit - sich ggf. nur ganz geringfügig unterscheidenden - Ausführungen eines Bibliothek-Funkdonselements bzw. von Kopien dieser Funktionselemente in Testsequenzen lässt sich im Stand der Technik nur dadurch umgehen, dass in einem umfassenden Bibliothek-Funktionselement alle vorkommenden Ausführungen erfasst werden, wobei dann aber die Gefahr besteht, dass ein schlecht überschaubares Funktionsgebilde entsteht, das eine aufwendige Fallsteuerung zur Unterscheidung und gezielten Aktivierung von Funktionsabwandlungen enthält,

Aufgabe der vorliegenden Erfindung ist es, eine Konfigurationseinrichtung zur graphischen Erstellung einer Testsequenz anzugeben, die eine verbesserte Handhabung und Implementierung von Funktionsabwandlungen in Instanzen von graphischen Bibliothek-Funktionselementen ermöglicht.

Die zuvor aufgezeigte und hergeleitete Aufgabe ist erfindungsgemäß bei einer Konfigurationseinrichtung der in Rede stehenden Art dadurch gelöst, dass das graphische Bibliothek-Funktionselement mit einem Funktionsplatzhalter ausstattbar ist, wobei der Funktionsplatzhalter in der Instanz des Bibliothek-Funktionselements mit einer Instanzfunkionalität ausstattbar ist, wobei die Referenz der Instanz des Bibliothek-Funktionselements auf das Bibliothek-Funktionselement erhalten bleibt. Durch die erfindungsgemäße Maßnahme ist es möglich, in einem graphischen Bibliothek-Funktionselement eine Stelle vorzusehen, die eine Individualisierung einer Instanz dieses graphischen Bibliothek-Funktionselements ermöglicht, nämlich indem an der Stelle des Funktionsplatzhalters eine individuelle Funktionalität der Instanz - die Instanzfunktionalität - hinterlegt wird. Durch diese Maßnahme ist es möglich, verschiedene Ausführungen eines Bibliothek-Funktionselements zu realisieren, wobei die gemeinsame Funktionalität aller Ausführungen bzw, aller Instanzen des Bibliothek-Funktionselements zentral an einer Stelle geändert werden kann, nämlich in dem graphischen Bibliothek-Funktionselement selbst. Die Instanzfunktionalität jeder Instanz des graphischen Bibliothek-Funktionselements muss nur an entsprechender Stelle hinterlegt werden, beispielsweise also in einer Datei, die die entsprechende Testsequenz beinhaltet.

Bei einer bevorzugten Ausgestaltung der Konfigurationseinrichtung ist vorgesehen, dass eine in dem Konfigurationsfeld erstellte Testsequenz oder eine Teil-Testsequenz als Bibliothek-Funktionselement definierbar ist, so dass graphische Bibliothek-Punktionselemente erstellbar sind, die schon einen Funktionsplatzhalter aufweisen.

Bei einer weiteren bevorzugten Ausgestaltung der erfindungsgemäßen Konfigurationseinrichtung ist vorgesehen, dass in einer reduzierten Darstellung der Instanz eines graphischen Bibliothek-Funktionselements mit einem Funktionsplatzhalter lediglich der Funktionsplatzhalter angezeigt wird. Dies ist deshalb vorteilhaft, weil das Augenmerk des Verwenders der Konfigurationseinrichtung sofort auch die Möglichkeit der Hinterlegung einer Instanzfunktionalität gelenkt wird und die - möglicherweise sehr umfangreiche - vorgegebene und unveränderliche Funktionalität des Bibliothek-Funktionselements in den Hintergrund gerückt wird.

In einer bevorzugten Weiterbildung der Konfigurationseinrichtung sind Funktionsplatzhalter in Funktionsplatzhaltern verwendbar, so dass selbst dann, wenn durch Bestimmung einer Instanzfunktionalität und nachfolgender Ableitung eines neuen Bibliothek-Funktionselementes aus dem jedenfalls zum Teil individualisierten Funktionselement ein neues Bibliothek-Funktionselement resultiert, wobei dieses neue Bibliothek-Funktionselement seinerseits einen Funktionsplatzhalter aufweist.

Ebenso ist es möglich, ein über eine Instanzfunktionalität individualisiertes Funktionselement immer wieder erneut mit einem Funktionsplatzhalter auszustatten, so dass auch über Generationen von Bibliothek-Funktionselementen hinweg die Möglichkeit der Individualisierung eines Funktionselementes durch Bestimmung einer Instanzfunktionalität erhalten bleibt; der Funktionsplatzhalter ist quasi rekursiv einsetzbar.

Bei einer besonders vorteilhaften Weiterbildung der Konfigurationseinrichtung sind die verschiedenen Ausführungen der Instanzfunktionalität des Funktionsplatzhalters eines graphischen Bibliothek-Funktionselements ermittelbar und in der Anzeigevorrichtung darstellbar. Die Konfigurationseinrichtung ist also in der Lage, verschiedene Ausführungen - in einer Testsequenz oder auch aus mehreren Testsequenzen - der Instanzfunktionalität in Instanzen eines graphischen Bibliothek-Funktionselements zu erkennen und dem Verwender anzuzeigen, so dass sich ein schneller Überblick über die Funktionsausführungen gewinnen lässt, Dies ist vor allem in Zusammenhang mit einer bevorzugten Weiterbildung der Konfigurationseinrichtung von Vorteil, bei der dem Funktionsplatzhalter einer Instanz eines Bibliothek-Funktionselements eine bereits existierende Ausführung der Instanzfunktionalität des Funktionsplatzhalters zuweisbar ist. Dies gelingt dann besonders einfach, wenn die verschiedenen Ausführungen der Instanzfuktionalität dargestellt werden und eine Ausführung ausgewählt werden kann und zur Instanzfunktionalität der Instanz des betreffenden Bibliothek-Funktionselements wird.

Im Einzelnen gibt es nun eine Vielzahl von Möglichkeiten, die erfindungsgemäße Konfigurationseinrichtung zur graphischen Erstellung einer Testsequenz auszugestalten und weiterzubilden. Dazu wird verwiesen sowohl auf die dem Patentanspruch 1 nachgeordneten Patentansprüche als auch auf die Beschreibung eines in der Zeichnung dargestellten Ausführungsbeispiels. In der Zeichnung zeigen
- Fig, 1: eine Konfigurationseinrichtung mit einem Konfigurationsfeld,
- Fig. 2a-2d: eine graphisch erstellte Testsequenz,
- Fig. 3: ein Ausführungsbeispiel eines mit einem Funktionsplatzhalter ausgestatteten graphischen Bibliothek-Funktionselements,
- Fig. 4: die Anwendung des mit einem Funktionsplatzhalter ausgestatteten Bibliothek-Funktionselements in einer Testsequenz und
- Fig. 5: das funktionell erweiterte graphische Bibliothek-Funktionsetement aus Fig. 3.

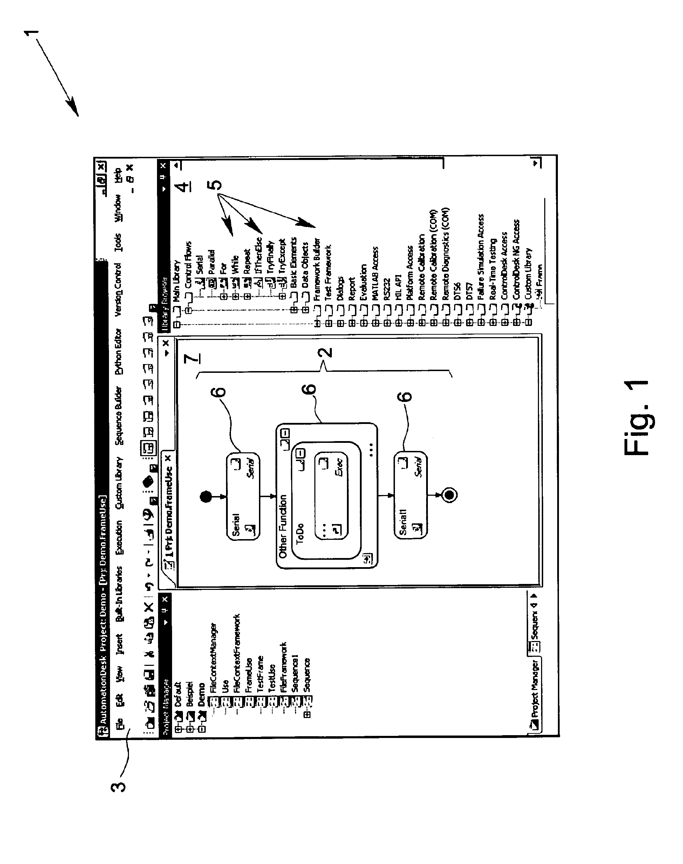

Fig. 1 zeigt zunächst in einem Überblick einen Teil einer aus dem Stand der Technik dem Prinzip nach bekannten Konfigurationseinrichtung 1 zur graphischen Erstellung einer Testsequenz 2, die jeweils zur Ansteuerung einer nicht dargestellten Testvorrichtung mit mindestens einer elektronischen Rechnereinheit dient.

Fig. 1 zeigt insbesondere eine Anzeigevorrichtung 3 der Konfigurationseinrichtung 1, wobei mit der Anzeigevorrichtung 3 in einem Bibliothekfeld 4 graphische Bibliothek-Funktionselemente 5 angezeigt werden. Die Testsequenz 2 ist durch Anordnen von Instanzen 6 mehrerer Bibliothek-Funktionselemente 5 in einem Konfigurationsfeld 7 erstellt worden. Die in dem Konfigurationsfeld 7 angeordneten Instanzen 6 der Bibliothek-Funktionselemente 5 referenzieren das entsprechende Bibliothek-Funktionselement 5 in der Bibliothek,

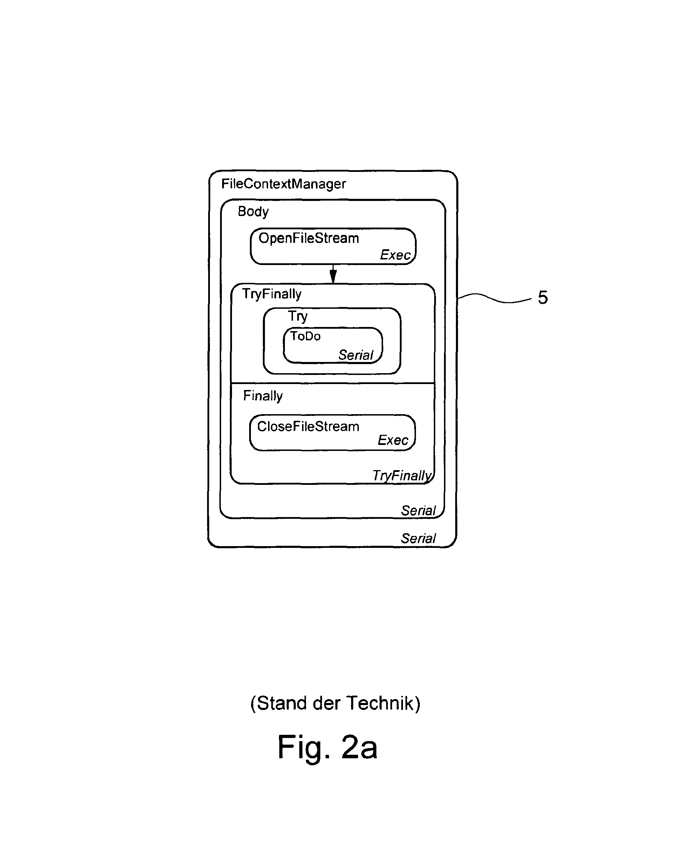

In den Fig. 2a - 2d ist beispielhaft das Arbeiten mit graphischen Bibliothek-Funktionselementen 5 bzw. mit Instanzen 6 dieser Bibliothek-Funktionselemente 5 dargestellt, wie es aus dem Stand der Technik bereits bekannt ist, In Fig. 2a ist dargestellt ein Bibliothek-Funktionselement 5, das insgesamt als "FileContextManager" bezeichnet ist. In dem Beispiel soll es mit diesem Bibliothek-Funktionselement 5 möglich sein, eine Datei zu öffnen, zu beschreiben und zu schließen. Das Öffnen der Datei wird in dem Funktionselement "OpenFileStream" realisiert und das Schließen der Datei ist durch das Funktionselement "CloseFileStream" implementiert. In dem Funktionselement "ToDo" ist im Speziellen das zu hinterlegen, was in die Datei zu schreiben ist. Das in Fig. 2a dargestellte Bibliothek-Funktionselement 5 könnte schon fester Bestandteil einer Bibliothek sein, das Funktionselement 5 könnte aber auch in dem Konfigurationsfeld 7 aus elementaren graphischen Bibliothek-Funktionselementen modelliert und dann zu einem Bibliothek-Funktionselement definiert worden sein.

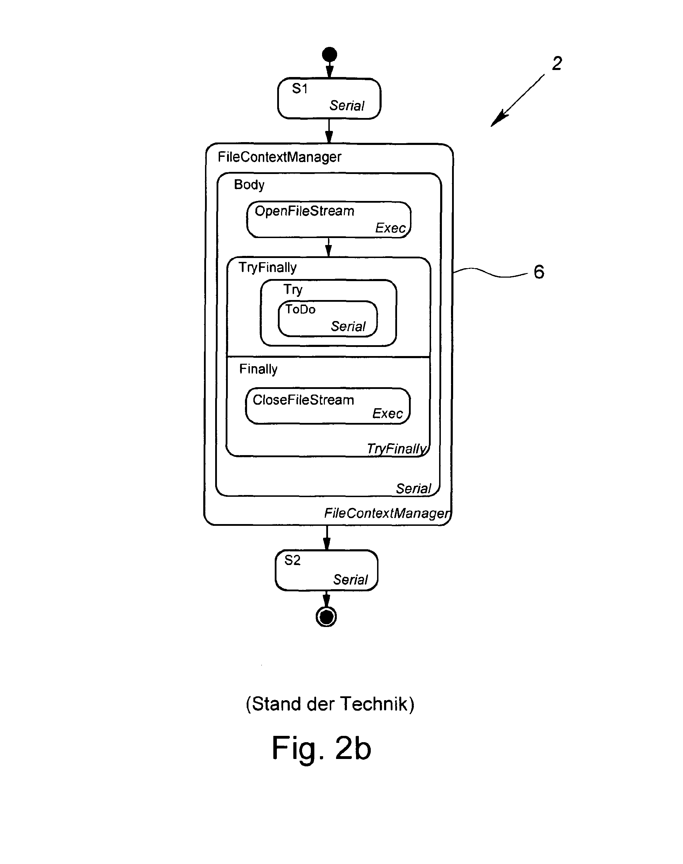

In Fig. 2b ist die Verwendung des Bibliothek-Funktionselements 5 aus Fig. 2a in einer Testsequenz 2 dargestellt, wobei die Testsequenz mit einer einleitenden Funktionalität "S1" beginnt, mit einer abschließenden Funktionalität "S2" beendet wird, wobei zwischen diesen beiden Funktionalitäten der Inhalt der Instanz 6 des Bibliothek-Funktionselements 5 "FileContextManager" ausgeführt wird; wichtig ist, dass es sich bei dem in Fig. 2b dargestellten Funktionselement "FileContextManager" um eine Instanz 6 des graphischen Bibliothek-Funktionselements 5 "FileContextManager" aus Fig. 2a handelt. Dass die Instanz 6 "FileContextManager" des graphischen Bibliothek-Funktionselements 5 "FileContextManager" das Bibliothek-Funktionselement 5 "FileContextManager" in der Bibliothek referenziert, bedeutet, dass die Instanz 6 lediglich ein Verweis auf das korrespondierende Bibliothek-Funktionselement 5 ist, was zur Folge hat, dass eine Änderung in dem graphischen Bibliothek-Funktionselement 5 automatisch auch auf die ― und jede - Instanz 6 dieses graphischen Bibliothek-Funktionselements 5 wirkt.

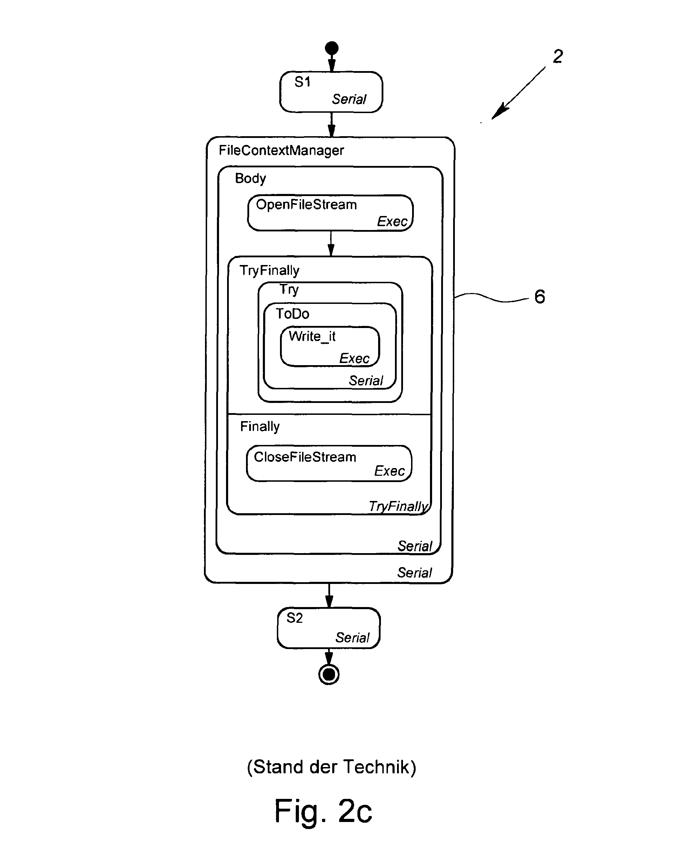

Das Instanz-Verhältnis zwischen der Instanz 6 eines Bibliothek-Funktionselements 5 und dem Bibliothek-Funktionselement 5 ist nicht aufrecht zu erhalten wenn - wie in Fig. 2c dargestellt - die Funktionalität der Instanz 6 des Bibliothek-Funktionselements 5 in irgendeiner Weise abgeändert, ergänzt oder verkürzt wird. In Fig. 2c ist beispielsweise eine Funktionsergänzung vorgenommen worden, indem dem Funktionselement "ToDo" das Funktionselement "Write_it" hinzugefügt worden ist. Das in Fig. 2c dargestellte Funktionselement "FileContextManager" ist daher keine Instanz mehr des Bibliothek-Funktionselements 5 "FileContextManager", sondern eine abgeänderte Kopie, die für sich eigenständig ist.

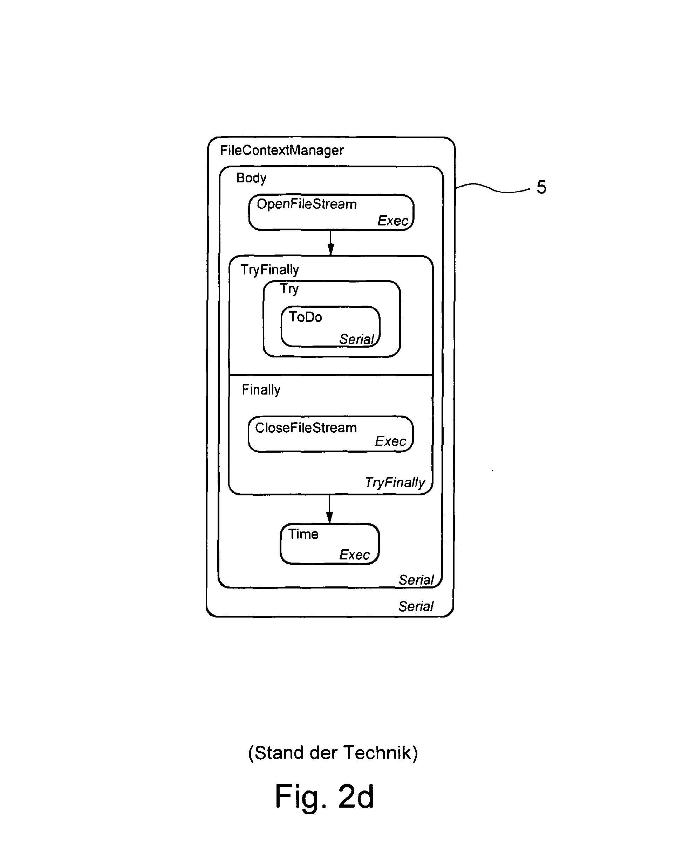

Eine Änderung des graphischen Bibliothek-Funktionselements 5 "FileContextManager" wie in Fig 2d dargestellt, wird in dem in Fig. 2c dargestellten Funktionselement "FileContextManager" nicht mehr nachvollzogen, sondern muss manuell eingepflegt werden, sofern dies gewünscht ist. Zwar kann das in Fig. 2c dargestellte Funktionselement "FileContextManager" wiederum als ein graphisches Bibliothek-Funktionselement definiert werden ― wobei natürlich ein anderer Name als "FileContextManager" zu verwenden wäre ―, jedoch führt ein solches Vorgehen zu einer Vielzahl an Bibliothek-Funktionselementen, die alle separat voneinander gepflegt werden müssen.

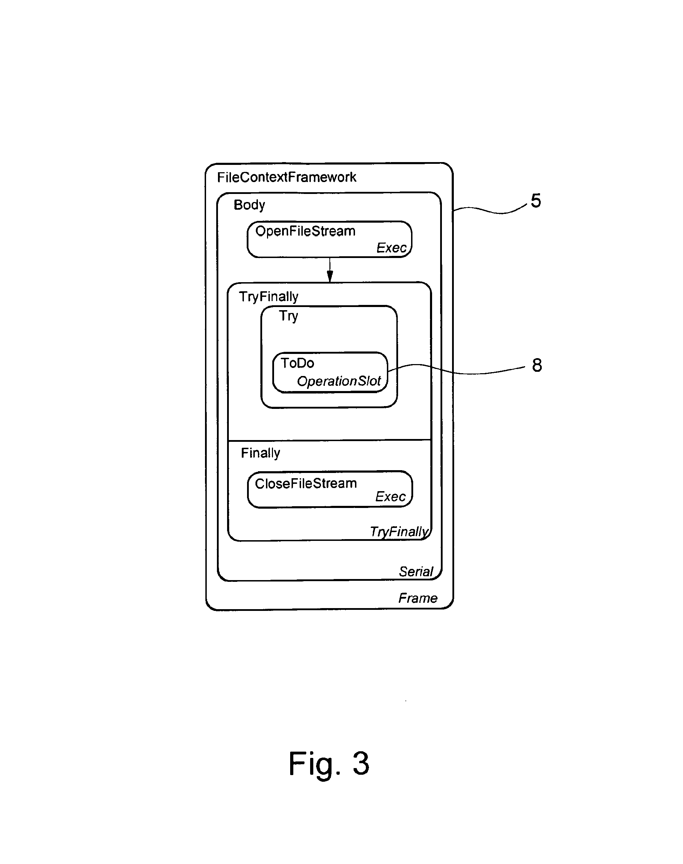

In Fig. 3 ist dargestellt ein mit den erfindungsgemäßen Mitteln realisiertes graphisches Bibliothek-Funktionselement 5, das sich zunächst scheinbar nicht von einer Implementierung unterscheidet, die bereits mit aus dem Stand der Technik bekannten Mitteln vorgenommen werden konnte, beispielsweise also von der Implementierung gemäß Fig. 2a, Der wesentliche Unterschied besteht jedoch darin, dass hier das Funktionselement "ToDo" nicht vom Typ "Serial" ist, wie im Ausführungsbeispiel gemäß Fig. 2a, sondern vielmehr das Funktionselement "ToDo" als Funktionsplatzhalter 8 "OperationSlot" realisiert ist, wobei der Funktionsplatzhalter 8 es ermöglicht, in einer Instanz 6 des Bibliothek-Funktionselements 5 mit einer lnstanzfunkdonalität ausgestattet zu werden, wobei die Referenz dieser Instanz 6 des Bibliothek-Funktionselements 5 auf das Bibliothek-Funktionselement 5 ― im Unterschied zum Verhalten im Stand der Technik - erhalten bleibt, Es ist also möglich, eine Vielzahl von Instanzen 6 des graphischen Bibliothek-Funktionselements 5 zu schaffen, in einer Testsequenz oder auch in mehreren Testsequenzen, und diese Vielzahl an Instanzen 6 jeweils mit einer individuellen Instanzfunktionalität zu versehen, wobei jede Instanz 6 weiterhin einen Bezug zu dem korrespondierenden Bibliothek-Funktionselement 5 aufweist. Dies hat zur Folge, dass das graphische Bibliothek-Funktionselement 5 in der entsprechenden Bibliothek geändert werden kann, und alle durch ihre Instanzfunktionalität individualisierten Instanzen 6 des Bibliothek-Funktionselements 5 diese Änderung übernehmen und zwar trotz der Individualisierung durch die Instanzfunktionalität. Diese Funktionalität ist dadurch realisiert, dass die in den Funktionsplatzhaltern hinterlegte Instanzfunktionalität nicht Bestandteil des entsprechenden Bibliothek-Funktionselements 5 ist.

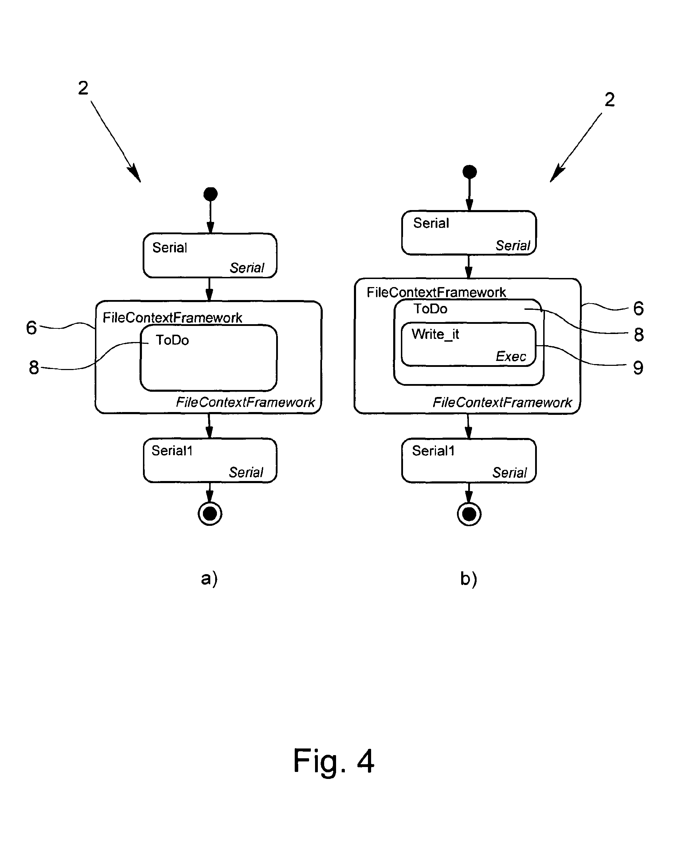

In Fig. 4 ist dargestellt die Verwendung des aus Fig. 3 bekannten graphischen Bibliothek-Funktionselement 5 "FileContextFrameWork" im Rahmen einer Testsequenz 2, wobei hier in einer reduzierten Darstellung der Instanz 6 des in Fig. 3 dargestellten Bibliothek-Funktionselements 5 mit dem Funktionsplatzhalter 8 "ToDo" lediglich der Funktionsplatzhalter 8 "ToDo" angezeigt wird (Fig. 4a). In einer dazu etwas erweiterten Darstellung (Fig. 4b) wird lediglich die Instanzfunktionalität 9 "Write_it" dargestellt, jedoch nicht die darüber hinausgehende Funktionalität des graphischen Bibliothek-Funktionselements 5 gemäß Fig. 3.

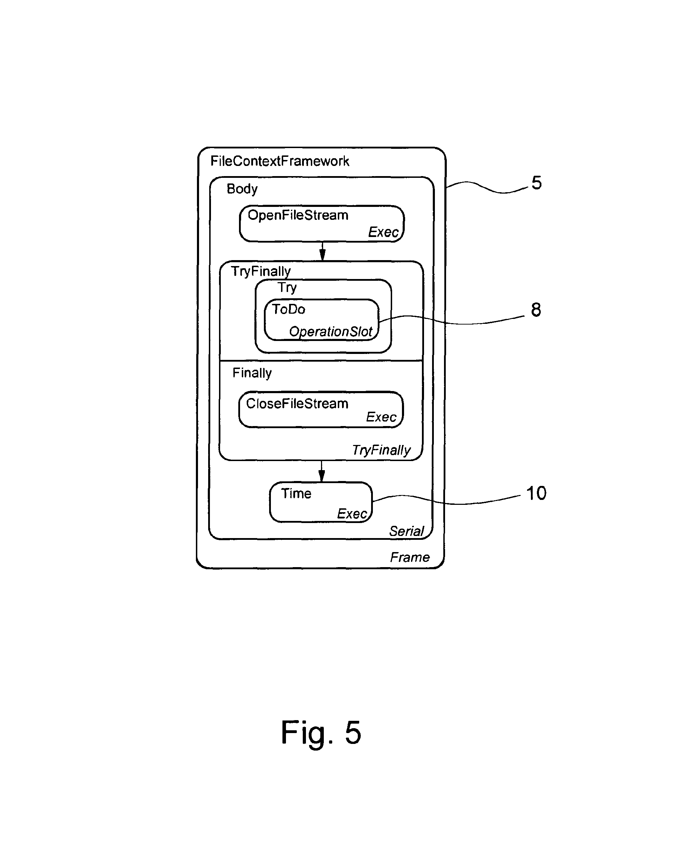

Der besondere Vorteil der erfindungsgemäßen Konfigurationseinrichtung 1 liegt darin, dass eine Änderung eines graphischen Bibliothek-Funktionselements 5 von den Instanzen 6 des graphischen Bibliothek-Funktionselements 5 in Testsequenzen übernommen werden, obwohl die Instanzen 6 des graphischen Bibliothek-Funktionselements 5 durch die Instanzfunktionalität individualisiert sind. In Fig. 5 ist dargestellt, dass das graphische Bibliothek-Funktionselement 5 durch ein Zusatz-Funktionselement 10 erweitert worden ist, was bewirkt, dass alle Instanzen 6 des Bibliothek-Funktionselements 5 diese Ergänzung nachvollziehen, obwohl sie durch den Funktionsplatzhalter 8 und die dort hinterlegte Instanzfunktionalität individualisiert worden sind.

Der Funktionsplatzhalter 8 und die dort hinterlegbare Instanzfunktionalität gestatten die zentrale Pflege verschiedener individueller Instanzen 6 eines graphischen Bibliothek-Funktionselements 5, es besteht demnach nicht die Notwendigkeit, Kopien individualisierter Bibliothek-Funktionselemente in Testsequenzen zu führen und diese jede für sich zu pflegen, auch muss nicht für jede individuelle Ausführung eines Bibliothek-Funktionselements ein neues Bibliothek-Funktionselement angelegt werden, die Pflege von Testsequenzen wird damit erheblich vereinfacht, und es ist möglich, Bibliotheken von graphischen Bibliothek-Funktionselementen übersichtlich zu halten.

## Patentansprüche

1. Konfigurationseinrichtung (1) zur graphischen Erstellung wenigstens einer Testsequenz (2) zur Ansteuerung einer Testvorrichtung mit mindestens einer elektronischen Rechnereinheit, wobei die Testvonrichtung gemäß der erstellten Testsequenz (2) ansteuerbar ist, wobei die Konfigurationseinrichtung (1) mindestens eine Anzeigevorrichtung (3) aufweist, mit der Anzeigevorrichtung (3) in einem Bibliothekfeld (4) graphische Bibliothek-Funktionselemente (5) angezeigt werden, wobei die Testsequenz (2) durch Anordnen wenigstens einer Instanz (6) eines Bibliothek-Funktionselements (5) in einem Konfigurationsfeld (7) erstellbar ist, wobei die in dem Konfigurationsfeld (7) angeordnete Instanz (6) eines Bibliothek-Funkionselements (5) das Bibliothek-Funktionselement (5) selbst referenziert,
**dadurch gekennzeichnet,**
**dass** das graphische Bibliothek-Funktionselement (5) mit einem Funktionsplatzhalter (8) ausstattbar ist, wobei der Funktionsplatzhalter (8) in der Instanz (6) des Bibliothek-Funktionselements (5) mit einer Instanzfunktionalität ausstattbar ist, wobei die Referenz der Instanz (6) des Bibliothek-Funktionselements (5) auf das Bibliothek-Funktionselement (5) erhalten bleibt.

2. Konfigurationseinrichtung (1) nach Anspruch 1, **dadurch gekennzeichnet, dass** eine in dem Konfigurationsfeld (7) erstellte Testsequenz (2) oder eine Teil-Testsequenz als graphisches Bibliothek-Funktionselement (5) definierbar ist.

3. Konfigurationseinrichtung (1) nach Anspruch 1 oder 2, **dadurch gekennzeichnet, dass** in einer reduzierten Darstellung der Instanz (6) eines graphischen Bibliothek-Funktionselementes (5) mit einem Funktionsplatzhalter (8) lediglich der Funktionsplatzhalter (8) angezeigt wird.

4. Konfigurationseinrichtung (1) nach einem der Ansprüche 1 bis 3, **dadurch gekennzeichnet, dass** Änderungen eines graphischen Bibliothek-Funktionselementes (5) von Instanzen (6) des graphischen Bibliothek-Funktionselementes (5) in Testsequenzen (2) übernommen werden,

5. Konfigurationseinrichiung (1) nach einem der Ansprüche 1 bis 4, **dadurch gekennzeichnet, dass** Funktionsplatzhalter (5) in Funktionsplatzhaltern (5) verwendbar sind und/oder graphische Bibliothek-Funktionselemente (5) auch über Generationen von Ableitungen hinweg erneut mit Funktionsplatzhaltern (8) ausstattbar sind.

6. Konfigurationseinrichtung (1) nach einem der Ansprüche 1 bis 5, **dadurch gekennzeichnet, dass** die verschiedenen Ausführungen der Instanzfunktionalität des Funktionsplatzhalters (8) eines graphischen Bibliothek-Funktionselementes (5) ermittelbar und mit der Anzeigevorrichtung (3) darstellbar sind.

7. Konfigurationseinrichtung (1) nach Anspruch 6, **dadurch gekennzeichnet, dass** dem Funktionsplatzhalter (8) einer Instanz (6) eines graphischen Bibliothek-Funktionselementes (5) eine bereits existierende Ausführung der Instanzfunktionalität des Funktionsplatzhalters (8) zuweisbar ist, insbesondere durch Auswahl einer Ausführung aus den dargestellten verschiedenen Ausführungen der Instanzfunktionalität.
